# EUROPÄISCHE PATENTSCHRIFT

(11) **EP 3 052 388 B1**
(45) Veröffentlichungstag und Bekanntmachung des Hinweises auf die Patenterteilung: **24.04.2019**
(21) Anmeldenummer: 14781158.2
(22) Anmeldetag: 02.10.2014
(51) Int. Cl.: B65B 35/30, B29C 45/42, B29C 45/17, B65B 5/06

(54) **VERFAHREN UND VORRICHTUNG ZUM VERPACKEN VON SPRITZGUSSTEILEN**
METHOD AND APPARATUS FOR PACKAGING INJECTION MOULDINGS
PROCÉDÉ ET DISPOSITIF POUR L'EMBALLAGE DE PIÈCES MOULÉES PAR INJECTION

(30) Priorität: 02.10.2013 DE 102013110948
(43) Veröffentlichungstag der Anmeldung: 10.08.2016
(73) Patentinhaber: HEKUMA GmbH, Dornierstrasse 14 85399 Hallbergmoos (DE)
(72) Erfinder: FALTENBACHER, Christian, 81929 München (DE); KAMMERLOHER, Jakob, 85395 Wolfersdorf (DE)
(74) Vertreter: Klingseisen, Franz
(86) Internationale Anmeldenummer: PCT/EP2014/071192
(87) Internationale Veröffentlichungsnummer: WO 2015/049350

(56) Entgegenhaltungen:
- WO-A1-2011/003507
- WO-A1-2014/121868

## Beschreibung

Die Erfindung betrifft ein Verfahren und eine Vorrichtung zum Verpacken von Spritzgussteilen, insbesondere von medizinischen Reaktionsgefäßen wie Pipettenspitzen, wobei die Spritzgussteile von der Spritzgießmaschine zu Verpackungsbehältern überführt werden.

Aus EP 2 323 930 ist ein derartiges Verfahren bekannt, wobei die aus der Spritzgießmaschine entnommenen Pipettenspitzen nach einem vorgegebenen Muster in einem Zwischenspeicher zur Bildung von Gruppen nacheinander abgelegt werden, die jeweils Pipettenspitzen aus einer bestimmten Kavität des Spritzgießwerkzeugs enthalten. Wenn die vorgegebenen Gruppen im Zwischenspeicher aufgefüllt sind, die auf die Kapazität eines Verpackungsbehälters abgestimmt sind, werden aus dem Zwischenspeicher die Pipettenspitzen in kavitätenreinen Gruppen in die Verpackungsbehälter überführt.
Bei diesem Verfahren ist ein gewisser Aufwand erforderlich, um die Pipettenspitzen in dem vorgegebenen Muster im Zwischenspeicher in Anpassung an die Verpackungsbehälter zu gruppieren.

WO 2014/121 868 A1 beschreibt ein kombiniertes Spritzgutentnahme- und Montageverfahren, wobei in einem Spritzgießwerkzeug mit ringförmiger Anordnung der Spritzgussteile in den einzelnen Ringgruppen unterschiedliche Spritzgussteile vorgesehen sind, die nach der Entnahme aus dem Spritzgießwerkzeug miteinander kombiniert werden, wobei aus der Ringanordnung eine Reihenanordnung der Spritzgussteile vorgesehen wird und die Reihen zueinander versetzt werden. Hierbei sind verschiedene Schritte erforderlich, um schließlich eine Reihenanordnung der miteinander kombinierten unterschiedlichen Spritzgussteile zu erhalten.

Weiterhin ist es bekannt, ausgehend von einer Ringanordnung der Spritzgussteile bei der Entnahme aus dem Spritzgießwerkzeug eine Reihenanordnung vorzusehen, in der kavitätenreine Reihen vorliegen, wobei die Spritzgussteile einer Reihe alle aus der gleichen Kavität des Spritzgießwerkzeugs stammen.

Der Erfindung liegt die Aufgabe zugrunde, den Ablauf der Überführung der Spritzgussteile von der Spritzgießmaschine zu den Verpackungsbehältern zu vereinfachen und zu beschleunigen.

Diese Aufgabe wird durch ein Verfahren gemäß Anspruch 1 und durch eine Verpackungsvorrichtung gemäß Anspruch 5 gelöst.

Erfindungsgemäß wird ein Verfahren zum Umsetzen von Spritzgussteilen, insbesondere Pipettenspitzen, aus einer Spritzgießmaschine in Verpackungsbehälter vorgesehen, das die folgenden Schritte umfasst, Entnehmen der Spritzgussteile in ringförmiger Anordnung aus einem Werkzeug der Spritzgießmaschine durch einen Entnahmegreifer, Umsetzen der ringförmigen Anordnung in eine Reihenanordnung der Spritzgussteile in einer Transferstation, Positionieren der Spritzgussteile in der Transferstation entsprechend der Positionierung in einem davon getrennten Werkstückträger und Überführen der Spritzgussteile in den Werkstückträger durch die Transferstation, worauf die Spritzgussteile aus dem Werkstückträger gegebenenfalls unter Zwischenschaltung einer Qualitätsprüfung in die Verpackungsbehälter eingesetzt werden.

Zweckmäßigerweise werden Ringgruppen von Spritzgussteilen am Entnahmegreifer in Reihengruppen in der Transferstation so umgesetzt, dass der Entnahmegreifer in zwei Schritten jeweils eine vorgegebene Anzahl von Spritzgussteilen in die Transferstation einsetzt, wobei im ersten Schritt eine erste Reihenbildung erfolgt und im zweiten Schritt eine Vervollständigung der Reihenbildung in der Transferstation.

Erfindungsgemäß werden im Entnahmegreifer längs einer geraden Linie einander gegenüberliegende Spritzgussteile aus der Ringanordnung entnommen und in eine Reihenanordnung in der Transferstation umgesetzt, worauf die verbliebenen Spritzgussteile der Ringanordnung, die längs einer geraden Linie einander gegenüberliegen, die schon vorhandene Reihenanordnung in der Transferstation ergänzen, sodass aus einer Ringanordnung von Spritzgussteilen am Entnahmegreifer wenigstens eine Reihe in der Transferstation ausgebildet wird,

Zweckmäßigerweise werden zwei nebeneinander liegende Reihen aus einer Ringanordnung gebildet

Nach dem Umsetzen der Spritzgussteile vom Entnahmegreifer in die Transferstation werden die Spritzgussteile in der Transferstation durch Bewegen von einzelnen Spritzgussteilen und/oder von Abschnitten der einzelnen Reihen relativ zueinander zu einer kompakten Reihenanordnung verdichtet, in der die Spritzgussteile zueinander und gegebenenfalls die Reihen der Spritzgussteile zueinander einen vorgegebenen Abstand voneinander haben, der der Positionierung im nachgeschalteten Werkstückträger entspricht

Mit anderen Worten wird die Positionierung der Spritzgussteile in der Transferstation so vorgenommen, dass sie der Positionierung der Spritzgussteile im Werkstückträger entspricht, damit die Spritzgussteile von der Transferstation direkt in den Werkstückträger umgesetzt werden können.

Zur Erzielung einer kurzen Taktzeit ist es von Vorteil, wenn die Verdichtung bzw. Positionierung der Spritzgussteile in der Transferstation entsprechend der Positionierung im Werkstückträger während des Bewegens bzw. Verschwenkens der Transferstation über den Werkstückträger erfolgt, wobei die Spritzgussteile direkt von der Transferstation in den Werkstückträger am Ende des Schwenkvorgangs der Transferstation eingesetzt werden können,

Wenn der Werkstückträger mehrere Reihen von Blöcken jeweils entsprechend einem Schuss der Spritzgießmaschine aufnimmt, wird die Transferstation zum Befüllen des Werkstückträgers längs einer Reihe im Werkstückträger bewegt bzw, beim Befüllen versetzt, während zur Aufnahme weiterer Reihen der Werkstückträger selbst quer zur Längserstreckung der Reihen relativ zur Transferstation versetzt wird.

Erfindungsgemäß umfasst eine Verpackungsvorrichtung insbesondere zur Durchführung des Verfahrens nach Anspruch 1, die Merkmale des Anspruchs 5.

Zweckmäßigerweise wird die Steuereinrichtung die Transferstation ansteuernd so ausgebildet, dass die Positionierung der Einzelelemente in der Transferstation während des Verschwenkens bzw. Bewegens der Transferstation über den Werkstückträger an die Positionierung im Werkstückträger angepasst wird.

Der Werkstückträger wird aus stabförmig ausgebildeten Werkstückträgereinheiten aufgebaut, die auf einer Trägereinrichtung befestigt sind, wobei die Werkstückträgereinheiten auf der Trägereinrichtung relativ zu einander verstellt werden können, damit die Gruppierung der Spritzgussteile im Werkstückträger an zu befüllende Verpackungsbehälter und an die Transfereinrichtung angepasst werden kann, durch welche die Spritzgussteile aus dem Werkstückträger in die Verpackungsbehälter umgesetzt werden.

Eine beispielsweise Ausführungsform der Erfindung wird nachfolgend anhand der Zeichnung näher erläutert Es zeigen
- Fig. 1: die ringförmige Anordnung von Spritzgussteilen auf einem Entnahmegreifer,
- Fig. 2: die Auswahl der in einem ersten und zweiten Schritt in eine Transferstation umzusetzenden Spritzgussteile,
- Fig. 3: die Anordnung der Spritzgussteile in der Transferstation nach dem ersten Umsetzschritt,
- Fig. 4: die Anordnung in der Transferstation nach dem zweiten Schritt,
- Fig. 5: einen Verdichtungsschritt der reihenförmigen Anordnung in der Transferstation zur Anpassung an die Positionierung im nachfolgenden Werkstückträger,
- Fig, 6 + 6a: die Überführung der Spritzgussteile aus der Transferstation auf einen teilweise wiedergegebenen Werkstückträger,
- Fig 7 + 7a,7b: die weitere Auffüllung des Werkstückträgers in Fig. 6 nach einem zweiten Schuss bzw, Spritzgießschritt,
- Fig. 8: eine Ansicht des Werkstückträgers und zugeordnete Verpackungseinheiten,
- Fig. 9: einen ersten Schritt der Umsetzung der Spritzgussteile aus dem Werkstückträger in die Verpackungsbehälter,
- Fig. 10: das Auffüllen der Verpackungsbehälter in einem zweiten Schritt,
- Fig. 11: die gefüllten Verpackungsbehälter und den teilweise entleerten Werkstückträger,

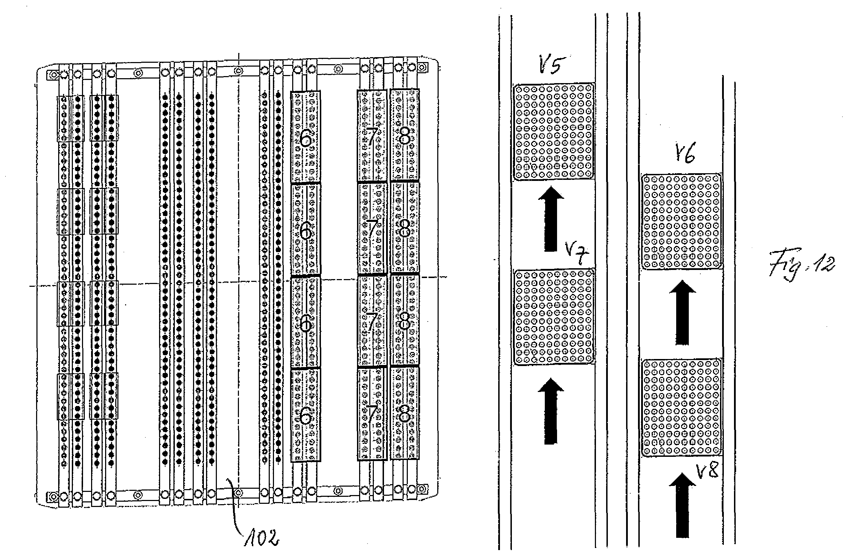

- Fig. 12: das Bereitstellen neuer Verpackungsbehälter bei noch teilweise gefülltem Werkstückträger,

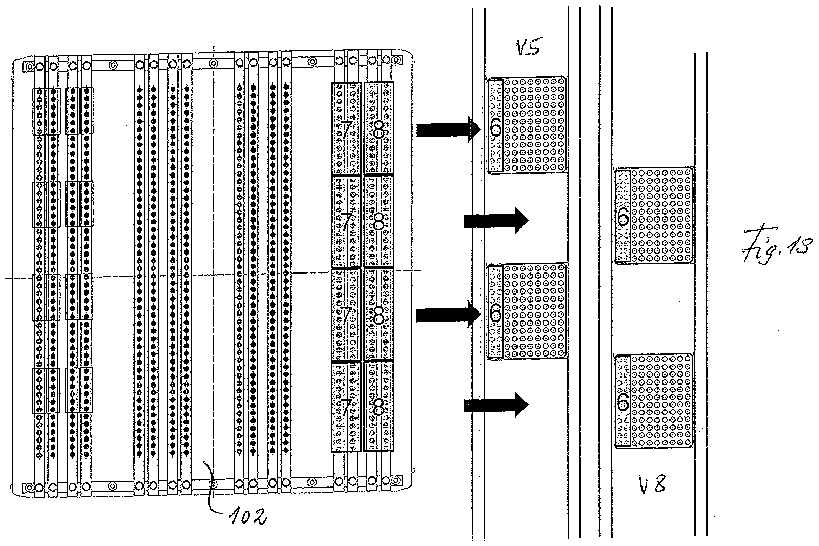

- Fig. 13: einen ersten Schritt des Befüllvorgangs der neuen Verpackungsbehälter,
- Fig. 14: teilweise gefüllte Verpackungsbehälter nach Entleeren des Werkstückträgers, und
- Fig. 15: eine schematische Ansicht der wesentlichen Baugruppen.

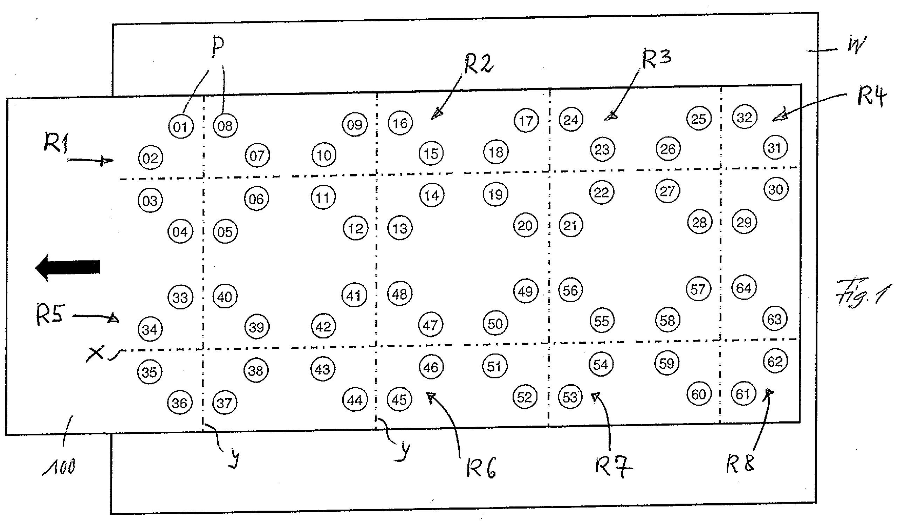

Fig. 1 zeigt eine Ansicht von acht ringförmig angeordneten Gruppen R1 bis R8 von Pipettenspitzen P bzw. Spritzgussteilen 01 bis 64 an einem Entnahmegreifer 100, der zwischen die geöffneten Werkzeughälften einer Spritzgießmaschine eingeführt wird, um die im Spritzgießwerkzeug W in der Anordnung der Fig. 1 in Kavitäten 01 bis 64 des Spritzgießwerkzeugs positionierten Spritzgussteile P aufzunehmen, worauf der Entnahmegreifer aus dem Bereich der Werkzeughälften herausgefahren wird, wie durch einen Pfeil in Fig 1 angedeutet ist. Mit W ist in Fig. 1 eine Werkzeughälfte der Spritzgießmaschine schematisch angedeutet,

Die Spritzgussteile 01 bis 64 sind in den jeweiligen Ringgruppen R1 bis R8 längs Linien einander gegenüberliegend in jeder Ringgruppe angeordnet, die parallel zu den Koordinatenlinien x und y verlaufen, sodass in der Ringgruppe R1 z.B.die Spritzgussteile 01 und 04 sowie 08 und 05 einander längs der y-Koordinate gegenüberliegen. Gleiches gilt für die horizontale Ausrichtung, wonach die Spritzgussteile 02 und 07 sowie 03 und 06 längs einer Linie parallel zur x-Koordinate angeordnet sind. Insgesamt sind die Spritzgussteile an Knotenpunkten eines Gitters aus geraden, sich kreuzenden Linien angeordnet sind.

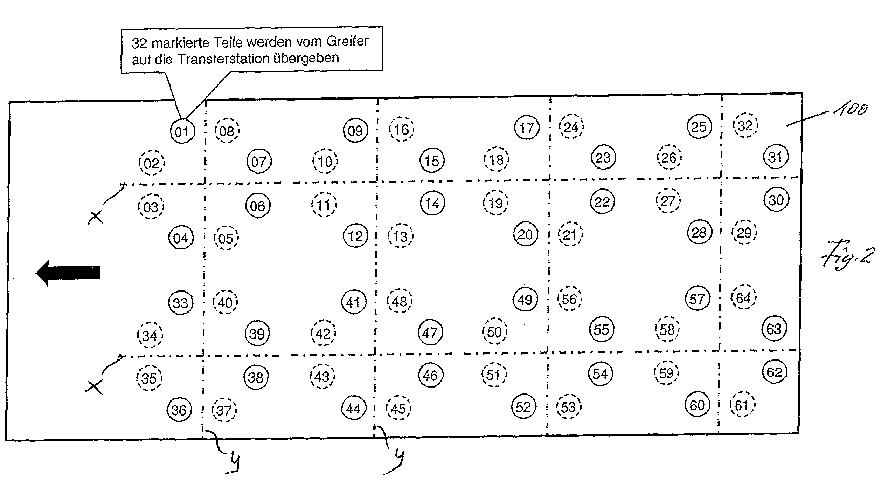

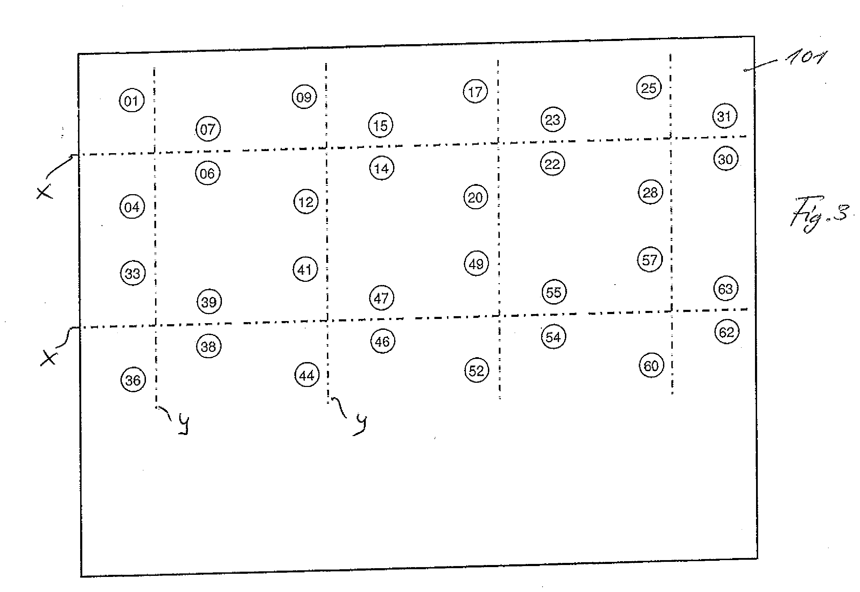

Fig. 2 zeigt als Beispiel die Auswahl von vier jeweils längs einer Koordinatenlinie einander gegenüberliegenden Spritzgussteilen 01, 04, 06 und 07 der Ringgruppe R1 von acht Spritzgussteilen 01 bis 08, die durch den Entnahmegreifer 100 in einem ersten Schritt in eine in Fig. 3 schematisch wiedergegebene Transferstation 101 in der Anordnung der durch eine durchgehende Linie markierten zweiunddreißig Positionen umgesetzt werden, sodass pro Ringgruppe jeweils zwei unterschiedlich ausgebildete Reihen in der Transferstation 101 entstehen, wie bei 01 bis 04 und 06 bis 07 in Fig. 3 wiedergegeben

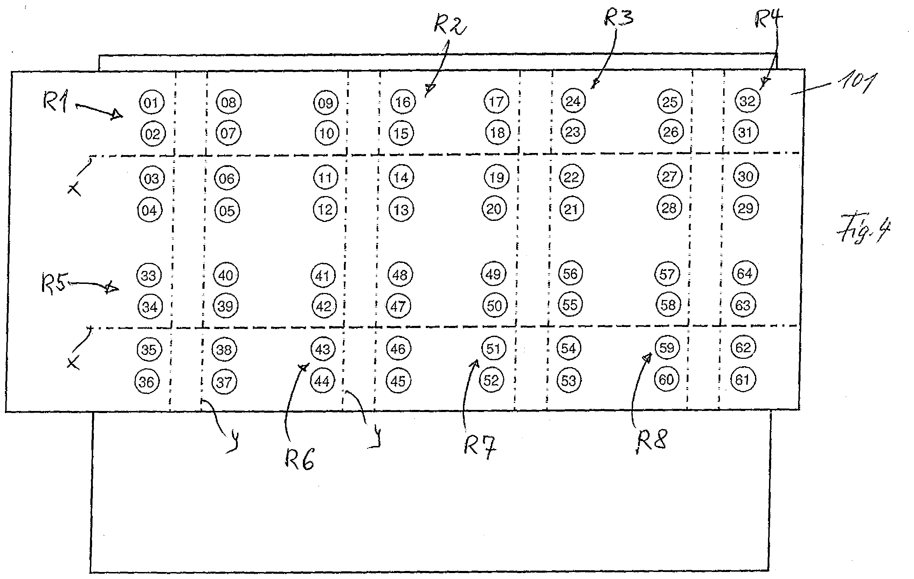

In einem zweiten Schritt werden durch den Entnahmegreifer 100 die in Fig. 2 als Reihen 02, 03 und 05, 08 verbliebenen Spritzgussteile P der ersten Ringgruppe R1 in der gleichen Positionierung in die Transferstation 101 in Fig. 3 so eingesetzt, dass die Reihe 02, 03 der ersten Ringgruppe R1 in die Reihe 01, 04 in der Transferstation 101 eingesetzt wird und die zweite Reihe 05, 08 an die Reihe 06, 07 in der Transferstation angesetzt wird, wodurch sich die in Fig. 4 wiedergegebene Anordnung von zwei Reihen 01 bis 04 und 05 bis 08 ergibt, die aus der ersten Ringgruppe R1 entstanden ist. Die gleiche Umsetzung vom Entnahmegreifer 100 in die Transferstation 101 erfolgt gleichzeitig bei den anderen Ringgruppen R2 bis R8, wobei der Entnahmegreifer 100 entsprechend dem Reihenabstand in Fig. 2 beim zweiten Schritt längs der x-Achse bewegt wird, damit die jeweils linke Reihe der Ringgruppen in die zweite Reihe eingesetzt wird ebenso wie die dritte Reihe an die vierte bzw. rechte Reihe jeder Ringgruppe angesetzt wird.

In Fig. 4 entspricht eine Reihengruppe R1 bis R8 jeweils einer Ringgruppe R1 bis R8, wobei bei diesem Ausführungsbeispiel jede Reihengruppe zwei Viererreihen umfasst, die aus einer Ringgruppe R1 bis R8 mit jeweils acht Spritzgussteilen gebildet sind

Es ist auch möglich, nur eine Reihe oder mehrere Reihen in einer Reihengruppe zu bilden, insbesondere, wenn eine Ringgruppe mehr als die wiedergegebene Anzahl von acht Spritzgussteilen umfasst.

Die Umsetzung der Ringgruppen von Spritzgussteilen P aus dem Entnahmegreifer 100 in die Transferstation 101 erfolgt bei diesem Ausführungsbeispiel derart, dass die Spritzgussteile einer Ringgruppe R1 eine Doppelreihe in der Transferstation 101 bilden, sodass jedes einzelne Spritzgussteil in der Reihengruppe hinsichtlich seiner Position in den Kavitäten des Spritzgießwerkzeugs identifizierbar ist
Z.B. sind die ringförmig angeordneten Spritzgussteile 01 bis 08 der ersten Ringgruppe R1 in Fig.. 1 in die Reihengruppe R1 umfassend zwei gerade Reihen 01 bis 04 und 05 bis 08 in Fig. 4 reihenförmig umgesetzt, sodass innerhalb einer Reihengruppe erkennbar ist, welches Spritzgussteil aus welcher der Kavitäten 01 bis 08 des Spritzgießwerkzeugs kommt.

Diese Umsetzung der Spritzgussteile aus einer Ringgruppe im Entnahmegreifer 100 in eine Reihenanordnung in der Transferstation 101 kann auch durch eine andere Einrichtung vorgenommen werden als durch Versetzen des Entnahmegreifers 100 von der ersten Reihe in der Transferstation 101 in die zweite Reihe. Beispielsweise können am Entnahmegreifer 100 verschiebbare Elemente mit einem Eingriffsteil zur Aufnahme eines Spritzgussteils ausgebildet sein, die nach Entnahme der Spritzgussteile aus dem Spritzgießwerkzeug W aus der ringförmigen Anordnung in eine Reihenanordnung verschoben werden, wie dies nachfolgend anhand der Ausgestaltung der Transferstation 101 beschrieben wird.

Beispielsweise können in der Ringanordnung der Fig. 2 am Beispiel der ersten Ringgruppe R1 die Spritzgussteile 02 und 03 nach rechts in Ausrichtung mit den Spritzgussteilen 01 und 04 verschoben werden, sodass sich die in Fig. 4 wiedergegebene erste Reihe ergibt, während gleichzeitig oder danach die in Fig. 2 durch durchgehende Linien markierten Spritzgussteile 06 und 07 nach links zwischen die durch gestrichelte Ringlinien markierten Spritzgussteile 05 und 08 verschoben werden, sodass sich die in Fig. 4 wiedergegebene zweite Reihe 05 bis 08 ergibt.

Mit anderen Worten kann die Umsetzung der Spritzgussteile aus einer Ringanordnung in eine Reihenanordnung in verschiedener Weise ausgeführt werden.

Auch ist es möglich, die Transferstation 101 anstelle des Entnahmegreifers 100 längs der x-Achse zu bewegen, um aus dem Entnahmegreifer eine Reihenanordnung zu bilden,

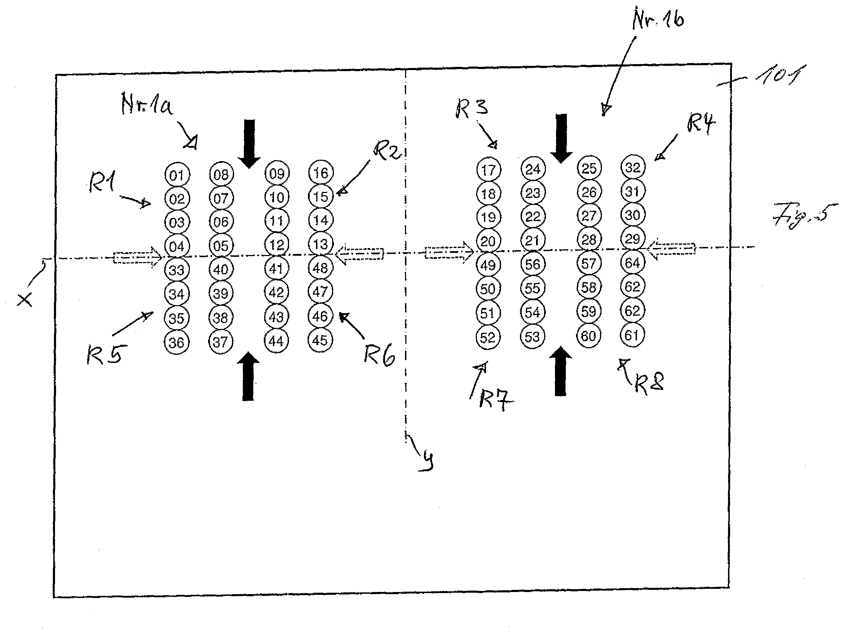

Fig. 5 zeigt die Verdichtung der in Fig. 4 wiedergegebenen acht Doppelreihen, in denen die Spritzgussteile innerhalb einer Reihe einen Abstand voneinander haben, zu insgesamt acht längeren Reihen, in denen die Spritzgussteile dicht nebeneinanderliegen, wobei - wie durch schwarze Pfeile wiedergegeben - die einzelnen Reihen der Fig. 4 in Längsrichtung der Reihen, also in y-Richtung, zusammengeschoben werden, sodass sich die in Fig. 5 wiedergegebene verdichtete Reihenanordnung ergibt, in der die Spritzgussteile in zwei Blöcken Nr. 1a und Nr. 1b mit jeweils vier Reihen umfassend jeweils vier Ring- bzw. Reihengruppen R1, R2, R5, R6 und R3, R4, R7, R8 in einer Reihe dicht aneinander liegen Die Reihen selbst innerhalb eines Blocks Nr. 1a oder Nr. 1b können einen vorgegebenen Abstand voneinander haben oder in Querrichtung verschoben werden, also längs der gestrichelten Pfeile, Auch die beiden Blöcke Nr. 1a und Nr 1b haben bevorzugt einen vorgegebenen einstellbaren Abstand voneinander.

Zum Ausführen dieses Verdichtungsvorgangs in Fig. 5 ist die Transferstation 101 vorzugsweise aus im Einzelnen nicht dargestellten Elementen aufgebaut, die relativ zueinander verschiebbar sind, wobei jedes Element eine Bohrung zur Aufnahme einer Pipettenspitze P aufweist. Diese Einzelelemente der Transferstation 101 werden in Richtung der schwarzen Pfeile in Fig. 5 relativ zueinander verschoben, wobei die vier Aufnahmebohrungen z.B. entsprechend 01 bis 04 einer Reihe in Fig. 4 von oben nach unten relativ zueinander verschoben werden, sodass innerhalb dieser Reihe die Pipettenspitzen P dicht aneinander liegen. Gleichzeitig werden die Elemente mit den Bohrungen 33 bis 36 von unten nach oben verschoben und die beiden Reihen 01 bis 04 und 33 bis 36 zu einer Reihe zusammengeschoben, sodass sich die Anordnung in Fig. 5 ergibt

Das Verdichten der acht Reihengruppen R1 bis R8 zu den zwei Blöcken Nr. 1a und Nr. 1b jeweils in Längsrichtung der einzelnen Reihen kann auch in der Weise vorgenommen werden, dass die Einzelelemente mit den Bohrungen für die Aufnahme der Spritzgussteile nur von oben nach unten oder nur von unten nach oben zusammengeschoben werden, um die verdichtete Reihenanordnung in Fig. 5 zu erhalten.

Bei dem beschriebenen Ausführungsbeispiel erfolgt die Verdichtung nur in Längsrichtung der Reihen. Eine Verdichtung in Querrichtung, also längs der x-Achse ist möglich, wenn dies zur Anpassung der Positionierung der Spritzgussteile im Werkstückträger 102 erforderlich sein sollte.

Bei diesem Verdichtungsschritt in der Transferstation 101 wird die Positionierung der Spritzgussteile P an die Positionierung im nachfolgenden Werkstückträger 102 angepasst.

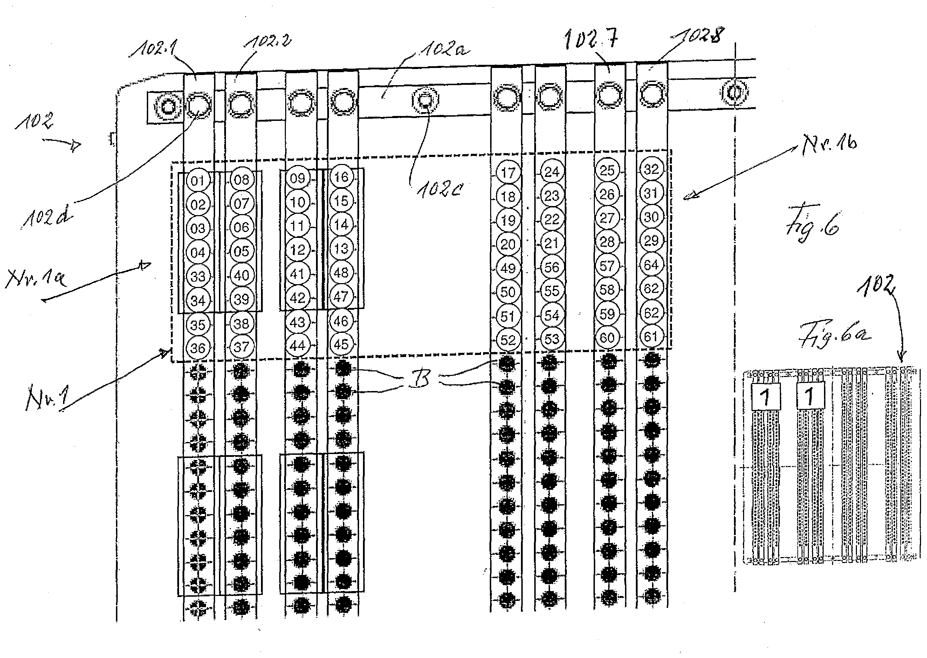

Die Transferstation 101 wird danach über den in Fig. 6 wiedergegebenen Werkstückträger 102 geschwenkt, wobei vorzugsweise während des Verschwenkens der zuvor beschriebene Verdichtungsschritt vorgenommen wird.
Die Spritzgussteile werden aus der Transferstation 101 direkt in den Werkstückträger 102 umgesetzt, weswegen die Anordnung der Spritzgussteile in der Transferstation 101 so verdichtet wird, dass die Positionierung der Positionierung im Werkstückträger 102 entspricht.

Mit anderen Worten wird die in Fig. 5 wiedergegebene Anordnung in der Transferstation 101 durch die Transferstation 101 direkt in die in Fig 6 durch eine gestrichelte Linie umrandete Anordnung der Spritzgussteile 01 bis 64 umgesetzt.

Fig. 6a zeigt in einer schematischen Ansicht des gesamten Werkstückträgers 102 die Anordnung der beiden Blöcke Nr. 1a und Nr. 1b mit der Nr. 1 entsprechend einem Schuss der Spritzgießmaschine bzw. entsprechend den Spritzgussteilen am Entnahmegreifer 100.

Beim Zurückschwenken der Transferstation 101 vom Werkstückträger 102 in die Aufnahmestellung, in der der Entnahmegreifer 100 den zweiten Schuss aus der Spritzgießmaschine in die Transferstation 101 umsetzt, werden die jeweils mit der Bohrung zur Aufnahme eines Spritzgussteils versehenen Einzelelemente der Transferstation 101 in die Aufnahmeposition in Fig. 4 gebracht, also die Einzelelemente wieder auseinandergeschoben, damit die Anordnung in Fig. 4 an die Positionierung der Spritzgussteile am Entnahmegreifer 100 angepasst wird Mit anderen Worten wird der Verdichtungsschritt in Fig. 5 rückgängig gemacht

Sobald der Entnahmegreifer 100 einen zweiten Schuss von Spritzgussteilen aus der Spritzgießmaschine entnommen hat, wird dieser in der gleichen Weise wie zuvor beschrieben in die Reihenanordnung in der Transferstation 101 umgesetzt (Fig. 4), worauf die Transferstation verschwenkt wird, vorzugsweise unter gleichzeitiger Verdichtung der Reihen in Anpassung an die Aufnahmeposition im Werkstückträger 102, wie sie Fig. 5 zeigt.

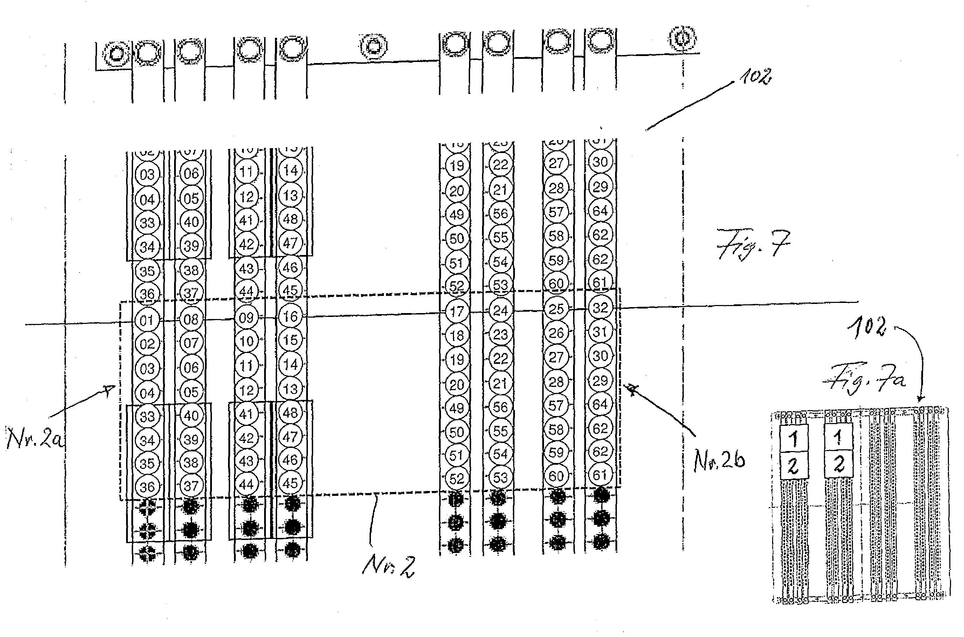

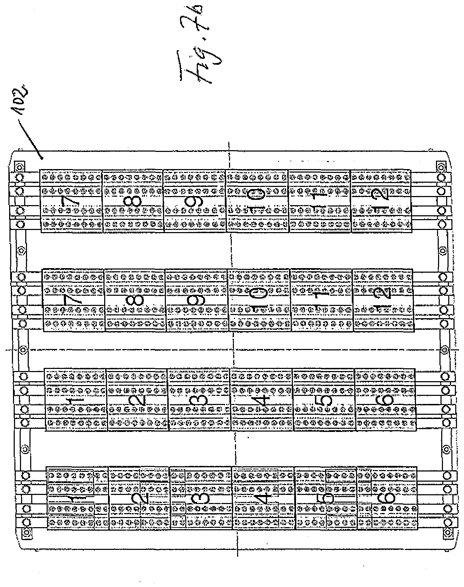

Fig. 7 zeigt die durch eine gestrichelte Linie umrandeten Blöcke Nr. 2a und Nr. 2b entsprechend einem zweiten Schuss, wobei der zweite Schuss unmittelbar angrenzend an den ersten Schuss im Werkstückträger 102 positioniert wird, wie Fig. 7a zeigt.

Zum Einsetzen des zweiten Schusses in den Werkstückträger 102 wird die Transferstation 101 wie beschrieben verschwenkt, während vorzugsweise gleichzeitig die Verdichtung erfolgt, wobei die Transferstation 101 in Längsrichtung der Reihen im Werkstückträger 102 über diesem bewegt wird, sodass der zweite Schuss unmittelbar angrenzend an den ersten Schuss im Werkstückträger 102 eingesetzt werden kann, wie Fig. 7a zeigt.

Damit führt die Transferstation 101 beim Auffüllen der ersten beiden Reihen des Werkstückträgers 102 entsprechend den Blöcken Nr. 1 bis Nr. 6 in Fig. 7b drei Bewegungsvorgänge aus.
Der erste Bewegungsvorgang ist das Verdichten der Reihen zur Anpassung an die Positionierung im Werkstückträger 102

Der zweite Bewegungsvorgang ist das Verschwenken bzw. Bewegen der Transferstation 101 über den Werkstückträger 102 mit Einsetzen der Spritzgussteile aus der Transferstation 101 direkt in den Werkstückträger 102
Die dritte Bewegung erfolgt durch eine Verschiebung der Transferstation 101 in Richtung der y-Achse unter die Position des ersten Schusses in Fig. 7a, wobei bei dem dargestellten Ausführungsbeispiel die Transferstation 101 in Fig. 5 von oben nach unten verschoben wird, damit die in Fig. 7 wiedergegebene Positionierung der Blöcke Nr. 2a und 2b erreicht wird.

Bevorzugt wird der zweite Bewegungsvorgang des Verschwenkens bzw. Verschiebens über den Werkstückträger 102 während des ersten Bewegungsvorgangs des Verdichtens ausgeführt, um eine kurze Taktzeit zu erreichen

Die Konzentration der Bewegungsabläufe wird in der Transferstation 101 vorgenommen, weil diese jeweils nur einen Schuss der Spritzgießmaschine aufnimmt und deshalb ein relativ geringes Gewicht haben kann

Wenn im Werkstückträger 102 die ersten beiden Reihen mit den Schüssen 1 bis 6 in Fig. 7b aufgefüllt sind, müsste die Transferstation 101 in Fig. 7b nach rechts bewegt werden, um die dritte und vierte Reihe mit den Schüssen 7 bis 12 in den Werkstückträger 102 umzusetzen.
Für die hierfür erforderliche Verschiebung der Transferstation 101 längs der x-Achse in Fig. 5 ist ein relativ hoher apparativer Aufwand erforderlich, weswegen zum Auffüllen der dritten und vierten Reihe des Werkstückträgers 102 in Fig. 7b mit den Blöcken 7 bis 12 der Werkstückträger 102 nach links in Fig. 7b so verschoben wird, dass sich die beiden Reihen mit den Nummern 7 bis 12 in der Position der beiden Reihen mit den Nummern 1 bis 6 befinden.

Bei diesem Ausführungsbeispiel wird beim vollständigen Befüllen des Werkstückträgers 102 dieser nur einmal in Richtung der x-Achse bewegt
Sobald der Werkstückträger 102 vollständig gefüllt ist, wie Fig. 7b zeigt, wird er in eine andere Position bewegt, damit z.B. eine Qualitätsprüfung der Spritzgussteile vorgenommen werden kann.

Hierauf wird ein leerer Werkstückträger 102 in die Aufnahmeposition bewegt, in der die Transferstation 101 die Spritzgussteile in den Werkstückträger 102 umsetzt.

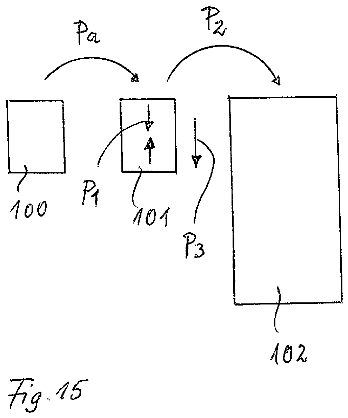

Fig. 15 zeigt schematisch die wesentlichen Baugruppen der erfindungsgemäßen Verpackungsvorrichtung umfassend den Entnahmegreifer 100, der eine Anzahl von Spritzgussteilen P entsprechend einem Schuss der Spritzgießmaschine aufnimmt, die Transferstation 101, die ebenfalls nur einen Schuss aufnimmt, und
den Werkstückträger 102, der eine größere Anzahl von Schüssen, z.B. 1 bis 12 (Fig. 7), aufnimmt.

Der Entnahmegreifer 100 setzt die in der Ringanordnung aus dem Spritzgießwerkzeug entnommenen Spritzgussteile in zwei Schritten in die Transferstation 101 um, indem der Entnahmegreifer 100 zunächst über die Transferstation geschwenkt oder verschoben wird (Pfeil Pa), worauf die beiden Schritte durch seitliches Verschieben ausgeführt werden, wobei bei jedem Schritt eine vorgegebene Anzahl von Spritzgussteilen in die Aufnahmeelemente in der Transferstation 101 eingesetzt wird, um eine Reihenanordnung zu erhalten, wie Fig. 3 und 4 zeigen.

Nach Befüllen der Transferstation 101 mit den Ringgruppen R1 bis R8 entsprechend Fig. 4 wird die Transferstation 101 vorzugsweise unter gleichzeitiger Verdichtung der Reihen R1 bis R8 (Pfeile P1 in Fig. 15) über den Werkstückträger 102 verschwenkt (Pfeil P2) oder derart über diesen bewegt, dass die verdichteten Reihen der Transferstation 101 direkt in den Werkstückträger 102 eingesetzt werden können der die gleiche Positionierung der Spritzgussteile aufweist wie die Transferstation 101 nach dem Verdichtungsschritt.
Zum weiteren Auffüllen des Werkstückträgers 102 wird die Transferstation 101 längs des Pfeils P3 bewegt, wie auch Fig. 7a erkennen lässt.

Bei dem Befüllvorgang des Werkstückträgers 102 wird dieser längs der x-Achse bei dem dargestellten Ausführungsbeispiel verschoben, um die dritte und vierte Reihe entsprechend den Schussnummern 7 bis 12 zu befüllen.
Wenn die Kapazität des Werkstückträgers 102 kleiner ausgelegt ist und beispielsweise nur die ersten beiden Reihen bei dem dargestellten Ausführungsbeispiel mit den Schussnummern 1 bis 6 umfasst, so kann der Werkstückträger 102 während des Befüllvorganges auch stationär angeordnet bleiben, während die Transferstation 101 in Richtung der y-Achse verschoben wird, um die einzelnen Blöcke Nr. 1 bis 6 aneinanderzusetzen.

Es ist auch möglich, den dritten Bewegungsablauf der Transferstation 101 durch Verschieben in Richtung der y-Achse in Fig. 7b zu ersetzen durch eine schrittweise Bewegung des Werkstückträgers 102 in Richtung der y-Achse, insbesondere wenn der Werkstückträger 102 nur in einer Längsrichtung entsprechend der y-Achse beispielsweise mit den Blöcken Nr. 1 bis 6 befüllt wird.
Bevorzugt wird die Transferstation 101 wegen des geringeren Gewichts in die erforderliche Umsetzposition bewegt.

Der Werkstückträger 102 kann nach dem Befüllen in Fig. 7b mit Spritzgussteilen in eine weitere Position bewegt werden, in der beispielsweise eine Qualitätskontrolle der einzelnen Spritzgussteile vorgenommen wird, während ein leerer Werkstückträger 102 in die Position zur Aufnahme der Spritzgussteile von der Transferstation 101 bewegt wird.
Die befüllten Werkstückträger 102 können gegebenenfalls auch in eine Lagerposition bewegt und dort gestapelt werden für die weiteren Verarbeitungsschritte der in den Werkstückträgern enthaltenen Spritzgussteile.

Die Verdichtung der Reihen von der Anordnung in Fig. 4 in die Anordnung nach Fig. 5 wird so vorgenommen, dass die verdichtete Anordnung in Fig. 5 der Anordnung im nachfolgenden Werkstückträger 102 der Fig 6 entspricht.
Durch diesen Verdichtungsschritt zur Anpassung der Positionierung in der Transferstation 101 an die Positionierung im Werkstückträger 102 kann der apparative Aufwand vereinfacht und eine kurze Taktzeit erreicht werden.

Fig. 6 zeigt einen Teilbereich eines in Fig. 6a und in Fig. 7b vollständig wiedergegebenen Werkstückträgers 102, in dem längere Reihen von Aufnahmebohrungen B zur Aufnahme der Pipettenspitzen P ausgebildet sind, sodass eine Reihe auf einer Werkstückträgereinheit z.B. 102.1 beispielsweise sechs aufeinander folgende Reihen der in Fig 5 wiedergegebenen verdichteten Reihen z.B. mit 01 bis 36 aufnehmen kann.

In Fig. 6 ist durch gestrichelte Linien ein Block Nr. 1 umfassend die beiden Blöcke Nr. 1a und Nr. 1b gekennzeichnet.
Die innerhalb des Blocks Nr. 1a an den Werkstückträgereinheiten 102.1 bis 102.4 wiedergegebenen Rechtecke haben mit der Blockaufteilung nichts zu tun, es handelt sich hierbei um den konstruktiven Aufbau des Werkstückträgers 102.

In Fig. 7b sind die in Fig. 5 wiedergegebenen Blöcke Nr. 1a und Nr. 1b, von denen jeder Block vier Ring- bzw. Reihengruppen R1, R2, R5, R6 und R3, R4, R7, R8 umfasst, als Blöcke mit den Nummern 1 bis 12 bezeichnet, wobei Block Nr. 1 einem Block Nr. 1a und Nr. 1b in Fig. 5 entspricht bzw. einem Schuss der Spritzgießmaschine mit den Kavitäten 01 bis 64.
Die Blöcke Nr. 2 in Fig. 7b entsprechen einem zweiten Schuss der Spritzgießmaschine, wobei in jedem Block Nr. 2 die gleiche Anordnung der Spritzgussteile wie in den Blöcken Nr. 1a und 1b in Fig. 5 vorhanden ist.

Mit anderen Worten sind in dem vollständig aufgefüllten Werkstückträger 102 der Fig. 7b zwölf Schuss der Spritzgießmaschine mit jeweils acht Ringgruppen R1 bis R8 enthalten, die im Werkstückträger 102 in Reihengruppen R1 bis R8 je Block umgesetzt sind.

Auch bei der Anordnung im Werkstückträger 102 kann jedes Spritzgussteil danach identifiziert werden, aus welcher Kavität des Spritzgießwerkzeugs das betreffende Spritzgussteil stammt, damit bei einer späteren Prüfung festgestellt werden kann, welche Kavität des Spritzgießwerkzeugs ein gegebenenfalls schlechtes Spritzgussteil liefert.
Die Identifizierung im Werkstückträger 102 ergibt sich durch die Nummern 01, 02 ..., die jedem Spritzgussteil in Übereinstimmung mit der Kavität in einer elektronische Steuereinheit zugeordnet ist, aus der das Spritzgussteil stammt.
Hinzu kommt die aus der Ringanordnung der Kavitäten umgesetzte Reihenanordnung mit fortlaufender Nummerierung bei der Umsetzung aus den Ringgruppen in die entsprechenden Reihengruppen, sodass jeweils Reihenabschnitte mit identischer Nummernfolge entstehen.

Die Abstände der einzelnen Reihen quer zur Längserstreckung ist im Werkstückträger 102 in der gleichen Weise ausgebildet wie in der verdichteten Anordnung in der Transferstation 101 in Fig. 5, sodass die einzelnen Reihen ohne Relativverschiebung zueinander aus der Transferstation 101 in den Werkstückträger 102 als Block umgesetzt werden können.

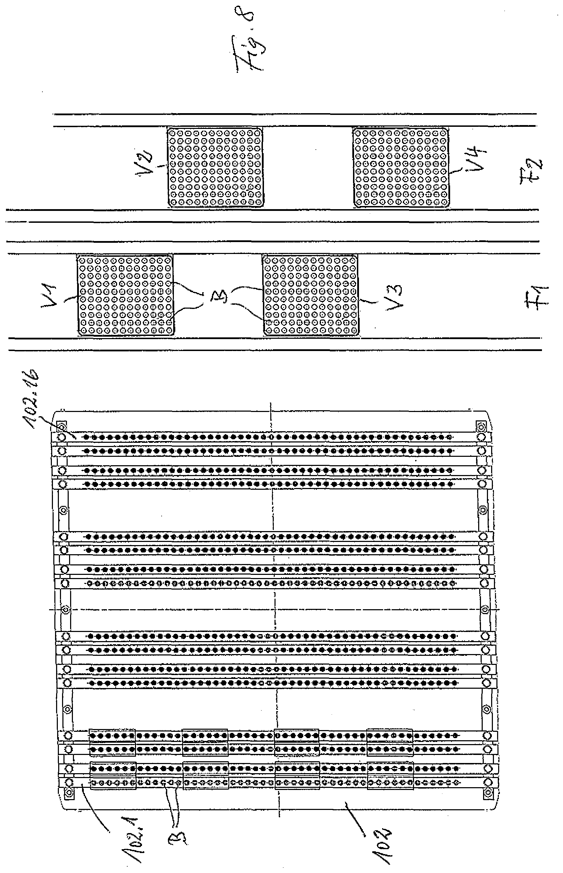

Fig. 6 zeigt eine Ausgestaltung des Werkstückträgers 102, wobei stabförmige Werkstückträgereinheiten 102.1 bis 102.8 vorgesehen sind, auf denen eine Reihe von Aufnahmebohrungen B ausgebildet ist, die zur Aufnahme der Spritzgussteile P vorgesehen sind. Die einzelnen stabförmigen Werkstückträgereinheiten sind an ihren Enden z.B. auf einer Trägerleiste 102a montiert, die über Befestigungselemente 102c an einem nicht näher beschriebenen Aufbau befestigt sind. Vorzugsweise sind die stabförmigen Werkstückträgereinheiten 102.1 bis 102.8 relativ zueinander verstellbar auf den Trägerleisten 102a und 102b (Fig. 8) angebracht, wobei mit 102d die vorzugsweise schraubenförmigen Verbindungselemente zwischen Werkstückträgereinheit 102.1, 102.2 usw. und Trägerleiste 102a angedeutet sind.

Wie ausgeführt, haben bei dem dargestellten Ausführungsbeispiel die Werkstückträgereinheiten 102.1 und folgende in Fig. 6 quer zur Längserstreckung bevorzugt den gleichen Abstand voneinander wie die in Fig. 5 verdichteten Reihen von Spritzgussteilen, sodass die Spritzgussteile aus der Transferstation 101 in Fig. 5 insgesamt als Block entnommen und auf den Werkstückträgern 102 in der in Fig. 6 wiedergegebenen Position eingesetzt werden können. Die Anordnung der Spritzgussteile P und die Reihenfolge der Spritzgussteile P in Fig. 5 entspricht somit der Anordnung und Reihenfolge in Fig. 6.

Während des Auffüllens der Werkstückträgereinheiten 102.1 bis 102.8 mit den Spritzgussteilen 01 bis 64 des ersten Schusses der Spritzgießmaschine erfolgt bereits ein zweiter Schuss der Spritzgießmaschine, sodass für die weitere Auffüllung des Werkstückträgers 102 erneut Spritzgussteile 01 bis 64 bereitstehen, die vom Entnahmegreifer 100 aus dem Spritzgießwerkzeug entnommen werden und in der Transferstation 101 in die in Fig 5 wiedergegebenen Reihen umgesetzt werden, sodass in einem zweiten Schritt der Auffüllung des Werkstückträgers 102 die zwei Blöcke mit je vier Reihen der Fig. 5 an die Reihen von Spritzgussteilen P in den Werkstückträgereinheiten 102.1 bis 102.8 der Fig. 6 eingesetzt werden können, wie dies Fig. 7 und Fig 7a, 7b zeigen. Das Einsetzen des zweiten Schusses von zweiten Spritzgussteilen 01 bis 64 im Anschluss an die zuvor eingesetzten Spritzgussteile 01 bis 64 in den Werkstückträgereinheiten 102.1 bis 102.8 ergibt das in Fig. 7a wiedergegebene Bild in der Gesamtansicht des Werkstückträgers 102, wonach der zweite Schuss in Form von zwei Blöcken mit der Nr. 2 angrenzend an den ersten Schuss in den zugeordneten Werkstückträgereinheiten 102.1 bis 102.8 eingesetzt wird.

Fig. 8 zeigt eine Gesamtansicht des Werkstückträgers 102, der bei diesem Ausführungsbeispiel sechzehn stabförmige Werkstückträgereinheiten 102.1 bis 102.16 neben zwei Förderbändern F1 und F2 aufweist, auf denen versetzt zueinander Verpackungsbehälter V1 bis V4 angeordnet sind
Die Werkstückträgereinheiten sind bei dem dargestellten Ausführungsbeispiel so lang ausgelegt, dass über die Länge einer Werkstückträgereinheit sechs Reihen von jeweils acht Spritzgussteilen aus der Transferstation 101 in Fig. 5 aufgenommen werden können. Eine einzelne Werkstückträgereinheit in Fig. 8 enthält somit 48 Pipettenspitzen P bzw. Spritzgussteile, wobei aus der Position des Spritzgussteils im Werkstückträger 102 zurückverfolgt werden kann, in welcher Kavität des Spritzgießwerkzeugs sich das Spritzgussteil befunden hat

Die in Fig. 8 als Beispiel wiedergegebenen Verpackungsbehälter V1 bis V4 haben eine Kapazität von 10 Reihen zu je 12 Pipettenspitzen P, wobei in Fig. 8 Bohrungen B in den Verpackungsbehältern schematisch angedeutet sind, in die die Pipettenspitzen P eingesetzt werden.

Fig. 8 zeigt einen noch leeren Werkstückträger 102, während Fig 7b den mit insgesamt zwölf Doppelblöcken gefüllten Werkstückträger 102 wiedergibt, in dem die in den Fig. 6a und 7a wiedergegebenen Doppelblöcke mit den Nrn. 1 und 2 aufgefüllt sind bis zu dem mit der Nr. 12 bezeichneten Doppelblock.

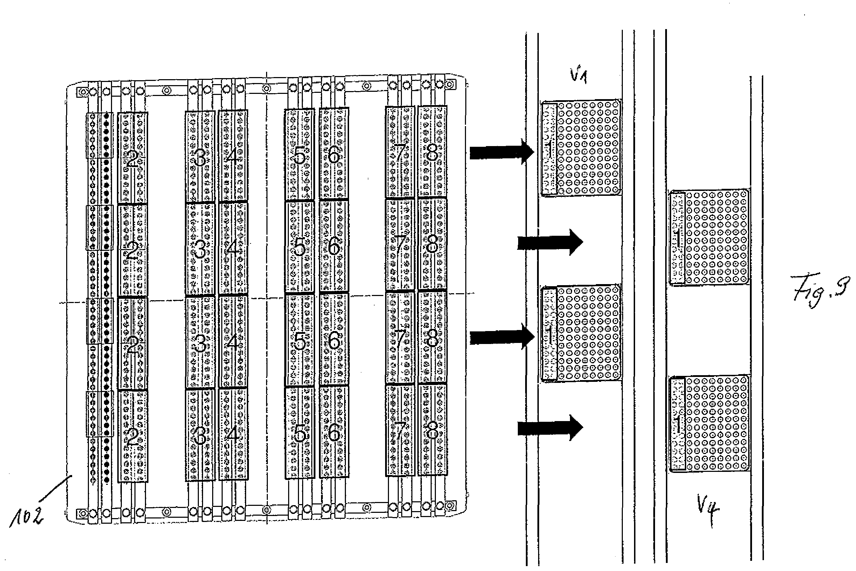

Fig. 9 zeigt die Überführung der Spritzgussteile P aus den ersten beiden Werkstückträgereinheiten 102,1 und 102..2 auf die vier versetzt zueinander angeordneten Verpackungsbehälter V1 bis V4, wobei aus den beiden ersten Werkstückträgereinheiten jeweils eine Reihe von zwölf Spritzgussteilen durch einen nicht dargestellten Entnahmegreifer entnommen und in Pfeilrichtung auf die beiden ersten Reihen im zugeordneten Verpackungsbehälter V1 bis V4 eingesetzt wird.

Bei dem Ausführungsbeispiel in Fig. 9 sind die vier Blöcke zu je zwei Reihen von zwölf Spritzgussteilen sowohl im Werkstückträger 102 als auch in den Verpackungsbehältern V1 bis V4 mit 1 bis 8 nummeriert.

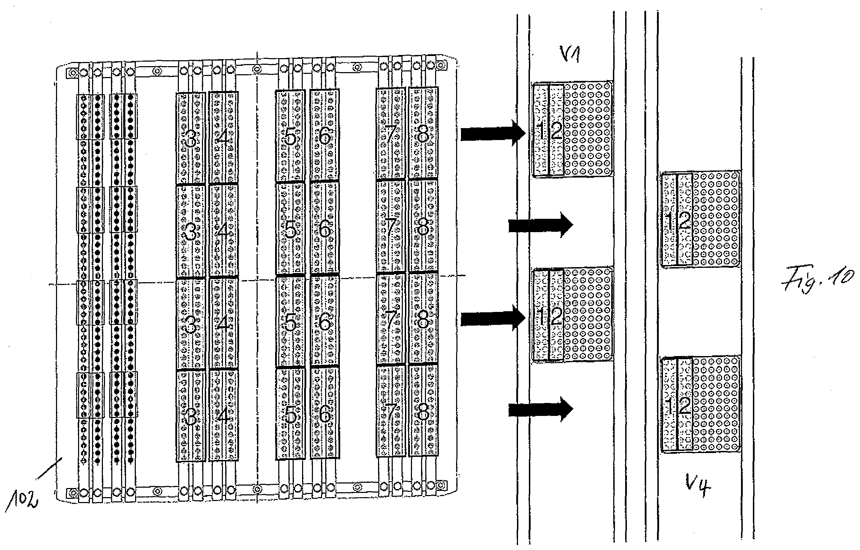

Wie Fig. 9 zeigt, werden bei dem dargestellten Ausführungsbeispiel von der ersten Reihe der Blöcke Nr. 1 bis 6 in Fig. 7b die ersten beiden Reihen durch ein Greifwerkzeug entnommen und als Doppelreihen mit der Nr. 1 in die Verpackungsbehälter V1 bis V4 eingesetzt.
Mit anderen Worten wird aus dem vollständig gefüllten Werkstückträger 102 in Fig. 7b die Auswahl für die Befüllung der Verpackungsbehälter V1 bis V4 so getroffen, dass ein schnelles taktweises Befüllen erfolgen kann.
Es ist auch möglich, anstelle des in Fig, 9 wiedergegebenen ersten Schrittes des Befüllens der Verpackungsbehälter zugleich mit der Doppelreihe Nr. 1 auch die Doppelreihe Nr. 2 der ersten vier Werkstückträgereinheiten in die Verpackungsbehälter umzusetzen, sodass sich schon beim ersten Schritt die Anordnung von Fig. 10 in den Verpackungsbehältern ergibt.
Die Auswahl der Reihen aus dem gefüllten Werkstückträger 102 in Fig. 7b wird zweckmäßigerweise in Abhängigkeit von gegebenenfalls zwischengeschalteten und nicht dargestellten Prüfstationen getroffen, wobei bei der Umsetzung nach Fig. 9 davon ausgegangen wird, dass zwei Reihen von Spritzgussteilen besser überprüft werden können als ein Block von vier Reihen.

Die Anordnung der Spritzgussteile P im Werkstückträger 102 ist zwar auf die Anordnung in der Transferstation 101 abgestimmt, um die Übertragung von der Transferstation 101 auf den Werkstückträger 102 zu vereinfachen, jedoch muss der Werkstückträger 102 hinsichtlich Anordnung der Spritzgussteile nicht auf die Art und Größe der Verpackungsbehälter V1 bis V4 abgestimmt sein, sodass aus dem befüllten Werkstückträger 102 auch unterschiedliche Verpackungsbehälter nach Bedarf befüllt werden können,

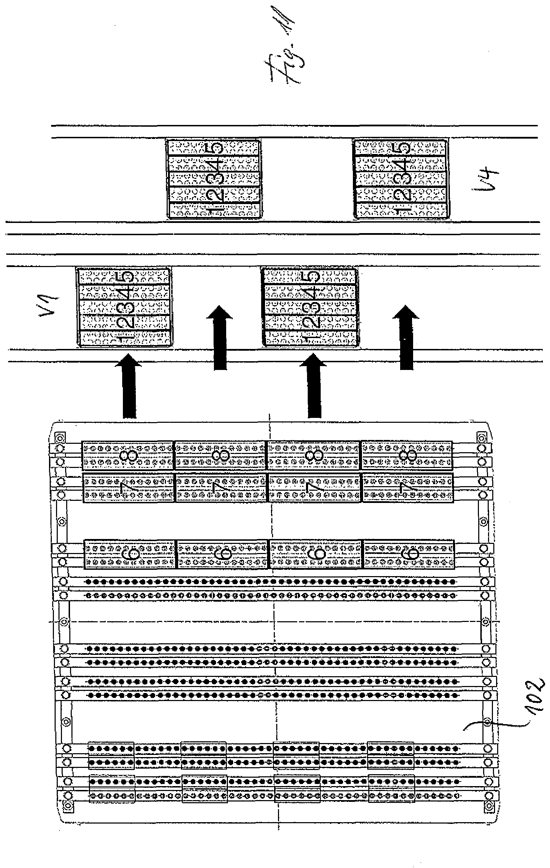

Fig. 10 und 11 zeigen in Folge die Umsetzschritte entsprechend Fig. 9, wobei in Fig. 10 in einem zweiten Schritt die Umsetzung der Spritzgussteile aus den dritten und vierten Werkstückträgereinheiten 102.3 und 102.4 in die Verpackungsbehälter wiedergegeben ist.
Fig. 11 zeigt die nach fünf Umsetzschritten vollständig befüllten Verpackungsbehälter V1 bis V4 mit jeweils fünf Blöcken von jeweils zwei Reihen mit je 12 Pipettenspitzen, wobei der Werkstückträger 102 nicht vollständig entleert ist.

Wie zuvor angegeben, kann die Umsetzung der Spritzgussteile aus dem gefüllten Werkstückträger 102 in Fig. 7b in anderer Weise vorgenommen werden als in den Fig. 9 bis 11 wiedergegeben.

Die Umsetzung der Spritzgussteile P erfolgt jeweils reihenweise, sobald die ringförmige Anordnung am Entnahmegreifer in eine Reihenform umgesetzt ist Sowohl die Umsetzung aus der Transferstation 101 in den Werkstückträger 102 als auch die Umsetzung aus dem Werkstückträger 102 in die Verpackungsbehälter erfolgt bevorzugt in Reihenform, auch wenn das Befüllen der Verpackungsbehälter V1 bis V4 in anderer Weise vorgenommen werden kann, weil der Werkstückträger 102 ein großes Reservoir an Spritzgussteilen bereitstellt, die nach Bedarf in Verpackungsbehälter umgesetzt werden können.

Wie durch die Pfeile in Fig. 9 bis 11 angedeutet, sind die Verpackungsbehälter V1 bis V4 auf den beiden Förderbändern F1 und F2 zweckmäßigerweise so gegeneinander versetzt, dass der Entnahmegreifer, der in Fig. 9 die beiden ersten Werkstückträgereinheiten entleert hat, in zwei Absetzschritten die Reihenblöcke 1 in die Verpackungsbehälter absetzen kann, ohne dass eine Verschiebung in Längsrichtung der Förderbänder erforderlich ist.

Es ist auch möglich, die vier Verpackungsbehälter V1 bis V4 in Fig. 9 auf einem Förderband in dichter Folge hintereinander anzuordnen, sodass die vom Entnahmegreifer aus dem Werkstückträger 102 entnommenen Reihen in einem Hub in die Verpackungsbehälter umgesetzt werden können.

Durch die erfindungsgemäße blockweise und reihenweise Umsetzung von Spritzgussteilen P aus der Transferstation 101 in den Werkstückträger 102 wird die Eingliederung von weiteren bei einer solchen Verpackungsanlage erforderlichen Stationen erleichtert, wie beispielsweise optische Qualitätsüberprüfung der einzelnen Pipettenspitzen und Auswerfeinrichtung für schadhafte Pipettenspitzen, wobei die Zuordnung einzelner Pipettenspitzen P zu den Kavitätennummern in Fig. 1 die Ermittlung einer eventuellen Fehlerquelle erleichtert,

Die Reihenanordnung und die reihenförmige Umsetzung der Spritzgussteile erleichtert die Integration weiterer Einrichtungen für die Qualitätskontrolle, wobei jeweils eine der umgesetzten Reihen für die Qualitätskontrolle zur Verfügung steht

Wenn bei der Qualitätsprüfung Schlechtteile festgestellt und anschließend aussortiert werden, können aus einem Reservoir mit Gutteilen die entsprechenden Positionen, aus denen Schlechtteile entnommen wurden, aufgefüllt werden Nach diesem Schritt, bei dem sichergestellt ist, dass ein Block oder eine Gruppe oder auch ein Verpackungsbehälter nur Gutteile enthält, kann die Identifizierung der Spritzgussteile hinsichtlich Kavität, aus der sie entnommen sind, entfallen.

Nach dem Befüllen der Verpackungsbehälter V1 bis V4 in Fig 11 werden diese weiter transportiert und es werden neue Verpackungsbehälter V5 bis V8 in Position relativ zum Werkstückträger 102 gebracht, wie dies Fig, 12 zeigt Hierauf werden die Verpackungsbehälter V5 bis V8 mit den im Werkstückträger 102 noch vorhandenen Pipettenspitzen befüllt, wie dies Fig.. 13 zeigt.

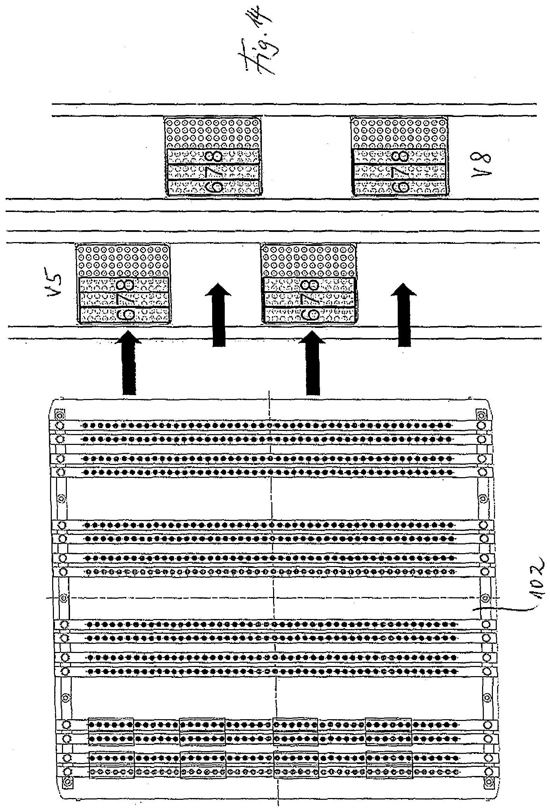

Fig. 14 zeigt die mit den Reihenblöcken der Nrn. 6 bis 8 teilweise befüllten Verpackungsbehälter V5 bis V8.

Da die einzelnen Spritzgussteile im Werkstückträger durch ihre der Kavitätennummer zugeordnete Nummerierung in einer nicht dargestellten elektronischen Steuereinrichtung identifizierbar sind, aus welcher Kavität sie stammen, können die Verpackungsbehälter aus dem Werkstückträger 102 auch so befüllt werden, dass ein vorzugsweise kleinerer Verpackungsbehälter nur Spritzgussteile aus einer vorgegebenen Kavität enthält.

Hierbei wird beispielsweise das erste Spritzgussteil 01 eines Blocks der Blöcke Nr. 1 bis Nr. 12 in einen Verpackungsbehälter umgesetzt, sodass diese zwölf Pipettenspitzen in einem Verpackungsbehälter aus der Kavität 01 des Spritzgießwerkzeugs stammen.

In gleicher Weise können andere Gruppen von Spritzgussteilen aus dem Werkstückträger 102 ausgewählt werden zum Befüllen von unterschiedlich gestalteten Verpackungsbehältern.

Bei dem Verdichtungsschritt in der Transferstation 101 können auch Abschnitte der einzelnen Reihen relativ zueinander verschoben bzw. verdichtet werden, je nach Anordnung in dem zu befüllenden Werkstückträger 102.

Auf diese Weise können
vorgegebene Gruppen von Spritzgussteilen in den Werkstückträger 102 aus der Transferstation 101 direkt umgesetzt werden.

Mit anderen Worten ermöglicht die mit der integrierten Verdichtungsfunktion ausgestattete Transferstation 101 eine an die jeweiligen Erfordernisse angepasste Gruppierung im Werkstückträger 102.

Auch kann die Reihenanordnung in der Transferstation 101 so verdichtet werden, dass beispielsweise die in Fig. 4 wiedergegebene horizontale Reihe mit den Spritzgussteilen 01 bis 32 horizontal verdichtet wird, wie auch die darunterliegenden horizontalen Reihen, sodass in der verdichteten Position acht horizontale Reihen übereinander angeordnet sind, in denen die Spritzgussteile dicht aneinander liegen entsprechend der Positionierung im Werkstückträger 102
Mit anderen Worten erfolgt bei diesem Ausführungsbeispiel die Verdichtung längs der x-Achse, während in Fig. 5 die Verdichtung längs der y-Achse erfolgt
Bei der Verdichtung längs der x-Achse kann die Transferstation 101 zum Befüllen des Werkstückträgers 102 auch um 90° aus der Position in Fig. 4 verschwenkt werden, damit die in der Transferstation 101 verdichteten Reihen direkt in den Werkstückträger 102 eingesetzt werden können.

Die Verdichtung in der Transferstation 101 erfolgt jeweils in Anpassung an die Positionierung der Spritzgussteile im Werkstückträger 102 derart, dass die Spritzgussteile aus der Transferstation 101 durch die Transferstation selbst direkt in den Werkstückträger 102 eingesetzt werden können.

Mit anderen Worten werden die für die schnelle Befüllung des Werkstückträgers erforderlichen Bewegungsabläufe des Positionierens in der Transferstation ausgeführt.

## Patentansprüche

1. Verfahren zum Umsetzen von Spritzgussteilen, insbesondere Pipettenspitzen (P), aus einer Spritzgießmaschine in Verpackungsbehälter (V1 bis V4), umfassend die folgenden Schritte:
Entnehmen der Spritzgussteile (P) in ringförmiger Anordnung aus einem Werkzeug (W) der Spritzgießmaschine durch einen Entnahmegreifer (100),
Umsetzen der ringförmigen Anordnung in eine Reihenanordnung der Spritzgussteile (P) in einer Transferstation (101),
Positionieren der Spritzgussteile (P) in der Transferstation (101) entsprechend der Positionierung in einem Werkstückträger (102), und
Überführen der Spritzgussteile (P) in den Werkstückträger (102) durch die Transferstation (101), worauf die Spritzgussteile (P) aus dem Werkstückträger (102) in die Verpackungsbehälter (V1 bis V4) eingesetzt werden,
- wobei im Entnahmegreifer (100) längs einer geraden Linie (Y) einander gegenüberliegende Spritzgussteile (P) aus der Ringanordnung entnommen und in eine Reihenanordnung in der Transferstation (101) umgesetzt werden,
worauf die verbliebenen Spritzgussteile (P) der Ringanordnung, die längs einer geraden Linie (Y) einander gegenüberliegen, die schon vorhandene Reihenanordnung in der Transferstation (101) ergänzen, sodass aus einer Ringanordnung von Spritzgussteilen (01 bis 08) am Entnahmegreifer (100) wenigstens eine Reihe in der Transferstation (101) gebildet wird,
- wobei Ringgruppen (R1 bis R8) von Spritzgussteilen am Entnahmegreifer (100) in Reihengruppen in der Transferstation (101) so umgesetzt werden, dass in der Reihenanordnung die Nummerierung der Spritzgussteile (P) fortlaufend der Nummerierung in der Ringanordnung entspricht,
- wobei die Reihenanordnung der Spritzgussteile (P) in der Transferstation (101) durch Bewegen von einzelnen Spritzgussteilen und/oder von Abschnitten der einzelnen Reihen relativ zueinander zu einer kompakten Reihenanordnung verdichtet wird, in der die Spritzgussteile (P) zueinander und gegebenenfalls die Reihen der Spritzgussteile zueinander einen vorgegebenen Abstand voneinander haben, der der Positionierung im Werkstückträger (102) entspricht,
- wobei Reihengruppen (R1 bis R8) in der Transferstation (101) entsprechend einem Schuss der Spritzgießmaschine in den Werkstückträger (102) so eingesetzt werden, dass die Folge der Ringgruppen im Spritzgießwerkzeug der Folge von Reihengruppen im Werkstückträger (102) entspricht, wobei die Transferstation wiederholt den Werkstückträger (102) befüllt, und
- wobei die einer Ringgruppe (R1 bis R8) im Spritzgießwerkzeug entsprechende Reihengruppe im Werkstückträger (102) derart in Reihenanordnung in die Verpackungsbehälter (V1 bis V4) umgesetzt wird, dass in einen Verpackungsbehälter jene Reihengruppen eingesetzt werden, die einer vorgegebenen Ringgruppe (R1 bis R8) im Spritzgießwerkzeug entsprechen.

2. Verfahren nach Anspruch 1, wobei die Transferstation (101) über den Werkstückträger (102) verschwenkt oder bewegt wird und die Spritzgussteile (P) durch die Transferstation (101) direkt in den Werkstückträger (102) eingesetzt werden.

3. Verfahren nach Anspruch 2, wobei das Verdichten der Reihenanordnung bzw. das Positionieren der Spritzgussteile (P) in der Transferstation (101) während des Verschwenkens oder Bewegens der Transferstation (101) über den Werkstückträger (102) vorgenommen wird.

4. Verfahren nach einem der vorhergehenden Ansprüche, wobei der Werkstückträger (102) zum Befüllen weiterer Reihen im Werkstückträger (102) in einer Richtung quer zu den Reihen relativ zur Umsetzposition der Transferstation (101) bewegt wird.

5. Verpackungsvorrichtung, insbesondere zur Durchführung des Verfahrens nach Anspruch 1, umfassend
einen Entnahmegreifer (100) mit ringförmiger Anordnung von Gruppen von Greifern für Spritzgussteile (P) entsprechend der ringförmigen Anordnung von Spritzgussteilen in Kavitäten eines Spritzgießwerkzeugs (w),
eine Transferstation (101), in der Einzelelemente zur Aufnahme eines Spritzgussteils (P) oder einer Gruppe von Spritzgussteilen (P) vorgesehen sind, die relativ zueinander verschiebbar sind,
einen Werkstückträger (102), und
eine Steuereinrichtung, welche die Transferstation (101) ansteuernd so ausgebildet ist, dass die Positionierung der Einzelelemente in der Transferstation (101) der Positionierung im Werkstückträger (102) entspricht, und die Transferstation (101) über den Werkstückträger (102) bewegt bzw. verschwenkt wird, um die Spritzgussteile aus der Transferstation (101) in den Werkstückträger (102) einzusetzen,
- wobei die Steuereinrichtung den Entnahmegreifer (100) derart ansteuernd ausgebildet ist, dass der Entnahmegreifer (100) die Ringanordnung der Spritzgussteile (P) in zwei Schritten in eine Reihenanordnung in der Transferstation (101) umsetzt,
- wobei im Entnahmegreifer (100) verschiebbare Elemente vorgesehen sind, die von der Steuereinrichtung so steuerbar sind, dass durch Verschieben der Elemente aus der Ringanordnung eine Reihenanordnung gebildet wird, und
- wobei der Werkstückträger (102) aus stabförmig ausgebildeten Werkstückträgereinheiten (102.1, 102.2...) aufgebaut ist, die jeweils eine Reihe von Aufnahmebohrungen (B) für die Spritzgussteile (P) aufweisen und wobei die Werkstückträgereineheiten (102.1, 102.2...) auf einer Trägereinrichtung (102a) relativ zueinander verstellbar angebracht sind.

6. Verpackungsvorrichtung nach Anspruch 5, wobei der Entnahmegreifer (100) eine Aufnahmekapazität an Spritzgussteilen (P) hat entsprechend einem Spritzgießschritt bzw. Schuss der Spritzgießmaschine,
die Transferstation eine Aufnahmekapazität an Spritzgussteilen (P) entsprechend einem Schuss hat, und
der Werkstückträger (102) eine Aufnahmekapazität hat, die einer größeren Anzahl von Schüssen der Spritzgießmaschine entspricht.

## Claims

1. Method for repositioning injection-moulded parts, in particular pipette tips (P), from an injection moulding machine into packaging containers (V1 to V4), comprising the following steps:
removing the injection-moulded parts (P) in an annular arrangement from a tool (W) of the injection moulding machine by means of removal grippers (100),
repositioning the annular arrangement into a serial arrangement of the injection-moulded parts (P) in a transfer station (101),
positioning the injection-moulded parts (P) in the transfer station (101) according to the positioning in a workpiece carrier (102), and
transferring the injection-moulded parts (P) in the workpiece carrier (102) by means of the transfer station (101), whereafter the injection-moulded parts (P) from the workpiece carrier (102) are inserted into the packaging containers (V1 to V4),
- wherein injection-moulded parts (P) opposing each other are removed from the annular arrangement in the removal gripper (100) along a straight line (Y) and repositioned in a serial arrangement in the transfer station (101), whereafter the remaining injection-moulded parts (P) of the annular arrangement, which oppose each other along a straight line (Y), supplement the already existing serial arrangement in the transfer station (101), so that at least one row is formed in the transfer station (101) from an annular arrangement of injection-moulded parts (01 to 08) at the removal gripper (100),
- wherein annular groups (R1 to R8) of injection-moulded parts are repositioned at the removal gripper (100) in serial groups in the transfer station (101) in such a way that the numbering of the injection-moulded parts (P) consistently equals numbering of the annular arrangement in the serial arrangement,
- wherein the serial arrangement of the injection-moulded parts (P) in the transfer station (101) are compressed relative to each other into a compact serial arrangement through moving individual injection-moulded parts and/or sections of individual rows, in which the injection-moulded parts (P) have a pre-determined distance from each other, and possibly the rows of injection-moulded parts to each other, which equals the positioning in the workpiece carrier (102),
- wherein the serial groups (R1 to R8) are used like a batch of the injection moulding machine in the workpiece carrier (102) in such a way that the sequence of annular groups in the injection moulding tool equals the sequence of serial groups in the workpiece carrier (102), wherein the transfer station (101) repeatedly fills the workpiece carrier (102), and
- wherein the serial group in the workpiece carrier (102) that equals the annular group (R1 to R8) in the injection moulding tool is repositioned in a serial arrangement into the packaging container (V1 to V4) in such a way that those serial groups that equal a pre-determined annular group (R1 to R8) in the injection moulding tool are inserted into a packaging container.

2. Method according to claim 1, wherein the transfer station (101) is pivoted or moved above the workpiece carrier (102) and the injection-moulded parts (P) are directly inserted into the workpiece carrier (102) by the transfer station (101).

3. Method according to claim 2, wherein compressing the serial arrangement or positioning the injection-moulded parts (P) in the transfer station (101) is carried out whilst pivoting or moving the transfer station (101) above the workpiece carrier (102).

4. Method according to one of the preceding claims, wherein the workpiece carrier (102) is moved in a transverse direction relative to the rows for repositioning the transfer station (101) for filling further rows in the workpiece carrier (102).

5. Packaging device, in particular for carrying out the method according to claim 1, comprising a removal gripper (100) with an annular arrangement of groups of grippers for injection-moulded parts (P) equalling the annular arrangement of injection-moulded parts in cavities of an injection moulding tool (w),
a transfer station (101), in which individual elements are envisaged for receiving an injection-moulded part (P) or a group of injection-moulded parts (P), which can be displaced relative to each other, a workpiece carrier (102), and a controller, which controls the transfer station (101) and is designed in such a way that positioning individual elements in the transfer station (101) equals a positioning in the workpiece carrier (102), and the transfer station (101) is moved or pivoted above the workpiece carrier (102) to use the injection-moulded parts from the transfer station (101) in the workpiece carrier (102),
- wherein the controller is designed to control the removal gripper (100) in such a way that the removal gripper (100) repositions the annular arrangement of the injection-moulded parts (P) in two steps into a sequence in the transfer station (101),
- wherein displaceable elements are envisaged in the removal gripper (100), which can be controlled by the controller in such a way that displacing the elements from the annular arrangement will form a serial arrangement, and
- wherein the workpiece carrier (102) is constructed from workpiece carrier units (102.1, 102.2, ...) of a rod-shaped design, which each have a row of receiving bores (B) for the injection-moulded parts (P), and wherein the workpiece carrier units (102.1, 102.2, ...) are mounted on a carrier means (102a) and can be moved relative to each other.

6. Packaging device according to claim 5, wherein the removal gripper (100) has a receiving capacity for injection-moulded parts (P) that equals one injection moulding step or batch of the injection moulding machine,
the transfer station has a receiving capacity for injection-moulded parts (P) that equals one batch, and the workpiece carrier (102) has a receiving capacity that equals a greater number of batches of the injection moulding machine.

## Revendications

1. Procédé servant à transposer des parties moulées par injection, en particulier des pointes de pipette (P), d'une machine de moulage par injection dans des contenants d'emballage (V1 à V4), comprenant les étapes suivantes :
prélèvement des parties moulées par injection (P) en un agencement annulaire d'un outil (W) de la machine de moulage par injection par un grappin de prélèvement (100),
transposition de l'agencement annulaire en un agencement en file des parties moulées par injection (P) dans un poste de transfert (101),
positionnement des parties moulées par injection (P) dans le poste de transfert (101) conformément au positionnement dans un porte-pièces (102), et
transfert des parties moulées par injection (P) dans le porte-pièces (102) par le poste de transfert (101), les parties moulées par injection (P) provenant du porte-pièces (102) étant insérées dans les contenants d'emballage (V1 à V4),
- dans lequel des parties moulées par injection (P) se faisant face les unes les autres sont prélevées de l'agencement annulaire dans le grappin de prélèvement (100) le long d'une ligne rectiligne (Y) et sont transposées en un agencement en file dans le poste de transfert (101),
les parties moulées par injection (P) restantes de l'agencement annulaire, qui se font face les unes les autres le long d'une ligne rectiligne (Y), complétant déjàl'agencement en file déjà présent dans le poste de transfert (101) de sorte qu'au moins une file est formée dans le poste de transfert (101) à partir d'un agencement annulaire de parties moulées par injection (01 à 08) au niveau du grappin de prélèvement (100),
- dans lequel des groupes annulaires (R1 à R8) de parties moulées par injection sont transposés, au niveau du grappin de prélèvement (100), en des groupes en file dans le poste de transfert (101) de telle sorte que dans l'agencement en file la numérotation des parties moulées par injection (P) correspond constamment à la numérotation dans l'agencement annulaire,
- dans lequel l'agencement en file des parties moulées par injection (P) est compacté dans le poste de transfert (101), par le déplacement de diverses parties moulées par injection et/ou de tronçons de diverses files les uns par rapport aux autres, en un agencement en file compact, dans lequel les parties moulées par injection (P) présentent les unes par rapport aux autres et éventuellement les files des parties moulées par injection présentent les unes par rapport aux autres un espacement prédéfini, qui correspond au positionnement dans le porte-pièces (102),
- dans lequel des groupes en file (R1 à R8) sont insérés, dans le poste de transfert (101), en conséquence d'un lancement de la machine de moulage par injection, dans le porte-pièces (102) de telle sorte que la succession des groupes annulaires dans l'outil de moulage par injection correspond à la succession de groupes en file dans le porte-pièces (102), dans lequel le poste de transfert remplit de manière répétée le porte-pièces (102), et
- dans lequel le groupe en file correspondant à un groupe annulaire (R1 à R8) dans l'outil de moulage par injection est transposé dans le porte-pièces (102) à la manière de l'agencement en file dans le contenant d'emballage (V1 à V4) que sont insérés dans un contenant d'emballage ces groupes en file, qui précisément correspondent à un groupe annulaire (R1 à R8) prédéfini dans l'outil de moulage par injection.

2. Procédé selon la revendication 1, dans lequel le poste de transfert (101) est pivoté ou déplacé au-dessus du porte-pièces (102), et les parties moulées par injection (P) sont insérées par le poste de transfert (101) directement dans le porte-pièces (102).

3. Procédé selon la revendication 2,
dans lequel le compactage de l'agencement en file ou le positionnement des parties moulées par injection (P) dans le poste de transfert (101) est entrepris pendant le pivotement ou le déplacement du poste de transfert (101) au-dessus du porte-pièces (102).

4. Procédé selon l'une quelconque des revendications précédentes, dans lequel le porte-pièces (102) est déplacé, pour remplir d'autres files dans le porte-pièces (102), dans une direction transversale par rapport aux files par rapport à la position de transposition du poste de transfert (101).

5. Dispositif d'emballage, en particulier servant à mettre en oeuvre le procédé selon la revendication 1, comprenant
un grappin de prélèvement (100) avec un agencement annulaire de groupes de grappins pour des parties moulées par injection (P) conformément à l'agencement annulaire de parties moulées par injection dans des cavités d'un outil de moulage par injection (w),
un poste de transfert (101), dans lequel divers éléments sont prévus pour recevoir une partie moulée par injection (P) ou un groupe de parties moulées par injection (P), qui peuvent être coulissées les unes par rapport aux autres,
un porte-pièces (102), et
un système de commande, lequel, pilotant le poste de transfert (101) est réalisé de telle sorte que le positionnement des divers éléments dans le poste de transfert (101) correspond au positionnement dans le porte-pièces (102) et le poste de transfert (101) est déplacé ou pivoté au-dessus du porte-pièces (102) pour insérer les parties moulées par injection provenant du poste de transfert (101) dans le porte-pièces (102),
- dans lequel le système de commande, pilotant le grappin de prélèvement (100) est réalisé de telle manière que le grappin de prélèvement (100) transpose l'agencement annulaire des parties moulées par injection (P) en deux étapes en un agencement en file dans le poste de transfert (101),
- dans lequel sont prévus, dans le grappin de prélèvement (100), des éléments pouvant être coulissés, qui peuvent être commandés par le système de commande de telle sorte qu'un agencement en file est formé par le coulissement des éléments provenant de l'agencement annulaire, et
- dans lequel le porte-pièces (102) est élaboré à partir d'unités de porte-pièces (102.1, 102.2, ...) réalisées en forme de barre, qui présentent respectivement une file d'alésages de réception (B) pour les parties moulées par injection (P), et
dans lequel les unités de porte-pièces (102.1, 102.2, ...) sont installées de manière à pouvoir être ajustées les unes par rapport aux autres sur un système de support (102a).

6. Dispositif d'emballage selon la revendication 5, dans lequel le grappin de prélèvement (100) a une capacité de réception de parties moulées par injection (P) correspondant à une étape de moulage par injection ou à un lancement de la machine de moulage par injection,
le poste de transfert a une capacité de réception de parties moulées par injection (P) correspondant à un lancement, et
le porte-pièces (102) a une capacité de réception, qui correspond à un nombre plus important de lancements de la machine de moulage par injection.
